# EUROPÄISCHE PATENTSCHRIFT

(11) **EP 0 868 333 B1**
(45) Veröffentlichungstag und Bekanntmachung des Hinweises auf die Patenterteilung: **24.04.2002**
(21) Anmeldenummer: 96943132.9
(22) Anmeldetag: 16.12.1996
(51) Int. Cl.: B60T 8/36

(54) **BEFESTIGUNG EINES HYDRAULIKAGGREGATES**
SECURING DEVICE FOR HYDRAULIC ASSEMBLY
FIXATION D'UNE UNITE HYDRAULIQUE

(30) Priorität: 20.12.1995 DE 19547541
(43) Veröffentlichungstag der Anmeldung: 07.10.1998
(73) Patentinhaber: Continental Teves AG & Co. oHG, 60488 Frankfurt (DE)
(72) Erfinder: BECK, Erhard, D-35781 Weilburg (DE); OTTO, Albrecht, D-61137 Schöneck (DE)
(86) Internationale Anmeldenummer: EP9605651
(87) Internationale Veröffentlichungsnummer: WO9722503

(56) Entgegenhaltungen:
- EP-A- 0 356 817
- WO-A-95/09752
- DE-A- 4 107 625

## Beschreibung

Die Erfindung betrifft ein Hydraulikaggregat nach dem Oberbegriff des Patentanspruchs 1.

Aus der DE 41 07 625 A1 ist bereits ein Hydraulikaggregat bekannt geworden, das für Kraftfahrzeugbremsanlagen mit Schlupfregelung Verwendung findet. Das Hydraulikaggregat weist eine Vielzahl von Funktionselementen in einem Trägergehäuse auf, die durch Deckel verschlossen sind. Zur Fixierung des Hydraulikaggregates an einem ortsfesten Bauteil, das im vorbeschriebenen Anwendungsfall durch die Motorraumbleche eines Kraftfahrzeugs gebildet ist, ist am Trägergehäuse des Hydraulikaggregats eine Mehrpunkt-Haltevorrichtung vorgesehen. Diese Haltevorrichtung besteht im wesentlichen aus jeweils einem Haltebolzen, an dem ein Blechtopf angenietet oder verschweißt ist, um ein Gummielement zu lagern. Das Gummielement wiederum befindet sich jeweils auf einem in das Trägergehäuse eingeschraubten Bolzen. Die Ausbildung einer derartigen Haltevorrichtung ist fertigungstechnisch aufwendig, da sie eine Vielzahl von Einzelteilen und der Notwendigkeit zur Herstellung von zusätzlichen Haltebohrungen im Trägergehäuse bedarf, die infolge der hierfür erforderlichen Materialstärke des Trägergehäuses nicht ohne weiteres gewählt werden können.

Das Hydraulikaggregat gemäß der WO-A-95/09752 weist zur Fixierung des mit einem Ventil- und einem Motorgehäuse versehenen Hydraulikaggregats an einer ortsfesten Konsole eine Haltevorrichtung auf, die sowohl an einem eine Pumpenbohrung druckmitteldicht verschließenden Stopfen im Ventilgehäuse als auch an einem Motorgehäusefortsatz angebracht ist. Ein Schwingungsdämpfer an der Haltevorrichtung ist folglich unmittelbar den Pumpen- und Motorschwingungen ausgesetzt.

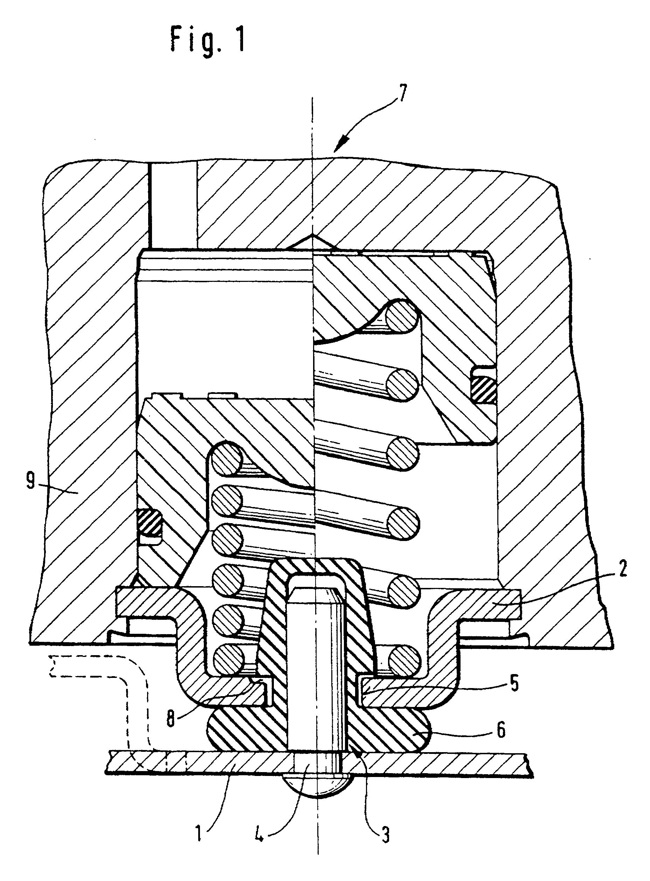

Die einzige Fig. 1 zeigt einen Ausschnitt eines Hydraulikaggregates, bestehend aus einem Gehäuse 9 und einem das Gehäuse 9 verschließenden Deckel 2. Im vorliegenden Ausführungsbeispiel handelt es sich hierbei um eine Speicherbaugruppe 7, die wesentliches Bestandteil eines als Druckregelvorrichtung für eine schlupfgeregelte Bremsanlage ausgebildeten Hydraulikaggregates ist. Die im Maßstab erheblich vergrößert dargestellten erfindungswesentlichen Bauteile zeigen zwecks Fixierung des Hydraulikaggregates an einem ortsfesten Bauteil 1 am Dekkel 2 die erfindungsgemäße Haltevorrichtung 3 in Form eines Zylinderelementes 4, das mit einer Haltebohrung 5 des Deckels 2 im Eingriff steht. Ferner weist die Haltevorrichtung 3 ein Elastomer 6 auf, das zwischen dem Zylinderelement 4 und der Haltebohrung 5 eingesetzt ist. Zwischen dem Elastomer 6 und der Haltebohrung 5 befindet sich zumindest abschnittsweise ein Durchgang 8, der bei Bedarf sicherstellt, daß etwaige Leckageflüssigkeit aus dem Innenraum der Speicherbaugruppe 7 nach außen abgeleitet werden kann. Das vorliegende Ausführungsbeispiel zeigt hierbei zwei konstruktiv verschiedene Ausführungsvarianten zur Gestaltung des Durchgangs 8, wonach einerseits der Durchgang 8 quasi in Form einer Drainageaussparung im Elastomer 6 eingespritzt ist oder andererseits der Durchgang 8 durch eine Drainageaussparung im Deckel 2 hergestellt werden kann. Das Elastomer 6 besteht vorzugsweise aus einem handelsübliche Vulkanisat, das im wesentlichen topfförmig gestaltet ist und mit seiner Ringnut in die Haltebohrung 5 des Deckels 2 einschnappt. Es verbleibt ein Axialabstand zwischen dem Deckel 2 und dem Bauteil 1 infolge einer bundförmigen Erweiterung des Elastomers 6, womit eine Schwingungs- und damit Geräuschisolierung an der Befestigungsstelle des Hydraulikaggregates gewährleistet ist. Das in das Elastomer 6 eingreifende Zylinderelement 4 ist vorzugsweise an dem als Karosserieblech dargestellten Bauteil 1 angeschweißt oder vernietet. Alternativ ist es denkbar, das Zylinderelement 4 am Deckel 2 anzuschweißen und das Elastomer 6 in einer Bohrung des Bauteils 1 einzuknöpfen. Dies hätte jedoch den Nachteil, daß auf die vorteilhafte Integration des Durchgangs 8 im Deckel 2 verzichtet werden müßte.

In der Abbildung nach Fig. 1 ist die Speicherbaugruppe 7 mit einer Vielzahl von konstruktiven Details versehen, die u.a. einen federbelasteten Kolben zeigt, der zwischen dem Deckel 2 und einer Druckmittelbohrung axial beweglich angeordnet ist. Die Einzelheiten der Speicherbaugruppe 7 sind jedoch für das Wesen der Erfindung von untergeordneter Bedeutung, da vielmehr in der platzsparenden, kostengünstigen Haltevorrichtung 3 an einem Deckel 2 ein maßgeblicher Vorteil entsteht. Folglich kann die erfindungsgemäße Befestigung gleichfalls für eine Vielzahl von Gehäuseverschlüssen mittels Deckel angewendet werden und ist damit nicht auf eine Funktionsgruppe beschränkt. Bei Hydraulikaggregaten, die als Druckregelvorrichtungen für schlupfgeregelte Bremsanlagen ausgebildet sind, werden nicht nur die Speicherbaugruppen sondern auch die Dämpfungskammern und die Pumpenzylinder mittels Deckel verschlossen, so daß deren Hohlräume gleichfalls für die Aufnahme der erfindungsgemäßen Haltevorrichtung 3 an den Dekkeln geeignet sind.

### Bezugszeichenliste

- 1: Bauteil
- 2: Deckel
- 3: Haltevorrichtung
- 4: Zylinderstift
- 5: Haltebohrung
- 6: Elastomer
- 7: Speicherbaugruppe
- 8: Durchgang
- 9: Gehäuse

## Patentansprüche

1. Hydraulikaggregat, bestehend aus einem Gehäuse (9) und wenigstens einem das Gehäuse (9) verschließenden Dekkel (2), wobei zur Fixierung des als Druckregelvorrichtung für eine schlupfgeregelte Bremsanlage ausgebildeten Hydraulikaggregats an einem ortsfesten Bauteil (1) am Deckel (2) eine Haltevorrichtung (3) angebracht ist, **dadurch gekennzeichnet, daß** das Hydraulikaggregat mit einer der Hydraulikflüssigkeit ausgesetzten Geräuschdämpfer- und/oder Speicherbaugruppe (7) versehen ist, und daß die Haltevorrichtung (3) am Deckel (2) der Geräuschdämpfer- und/oder der Speicherbaugruppe (7) angebracht ist.

2. Hydraulikaggregat nach Anspruch 1, **dadurch gekennzeichnet, daß** die Haltevorrichtung (3) ein Zylinderelement (4) aufweist, das mit einer Haltebohrung (5) im Eingriff steht.

3. Hydraulikaggregat nach Anspruch 1 oder 2, **dadurch gekennzeichnet, daß** die Haltevorrichtung (3) mit einem Elastomer (6) versehen ist.

4. Hydraulikaggregat nach Anspruch 3, **dadurch gekennzeichnet, daß** das Elastomer (6) zwischen der Haltebohrung (5) im Deckel (2) und dem Zylinderelement (4) angeordnet ist.

5. Hydraulikaggregat nach Anspruch 4, **dadurch gekennzeichnet, daß** zwischen dem Elastomer (6) und der Haltebohrung (5) abschnittsweise ein Durchgang (8) vorhanden ist.

## Claims

1. Hydraulic assembly, which is comprised of a housing (9) and at least one cover (2) closing the housing (9), wherein a retaining device (3) is provided on the cover (2) for attachment of the hydraulic assembly, that is configured as a pressure control device for a slip-controlled brake system, to a stationary component (1),
**characterized in that** the hydraulic assembly includes a noise-damping and/or accumulator assembly (7) which is exposed to hydraulic fluid, and **in that** the retaining device (3) is fitted to the cover (2) of the noise-damping and/or accumulator assembly (7).

2. Hydraulic assembly as claimed in claim 1,
**characterized in that** the retaining device (3) includes a cylindrical element (4) which is in engagement with a retaining bore (5).

3. Hydraulic assembly as claimed in claim 1 or claim 2,
**characterized in that** the retaining device (3) includes an elastomer (6).

4. Hydraulic assembly as claimed in claim 3,
**characterized in that** the elastomer (6) is interposed between the retaining bore (5) in the cover (2) and the cylindrical element (4).

5. Hydraulic assembly as claimed in claim 4,
**characterized in that** a passage (8) is provided in sections between the elastomer (6) and the retaining bore (5).

## Revendications

1. Ensemble hydraulique, constitué d'un boîtier (9) et d'au moins un couvercle (2) fermant le boîtier (9), un dispositif de maintien (3) étant monté sur le couvercle (2) pour la fixation, sur une pièce fixe (1), de l'ensemble hydraulique réalisé en tant que dispositif de régulation de pression pour un système de freinage à régulation du glissement, **caractérisé en ce que** l'ensemble hydraulique est pourvu d'un groupe structurel d'amortisseur de bruit et/ou d'accumulateur (7) soumis à l'action du liquide hydraulique et **en ce que** le dispositif de maintien (3) est monté sur le couvercle (2) du groupe structurel d'amortisseur de bruit et/ou d'accumulateur (7).

2. Ensemble hydraulique suivant la revendication 1, **caractérisé en ce que** le dispositif de maintien (3) comporte un élément cylindrique (4) qui est en prise avec un trou de maintien (5).

3. Ensemble hydraulique suivant la revendication 1 ou 2, **caractérisé en ce que** le dispositif de maintien (3) est pourvu d'un élément élastomère (6).

4. Ensemble hydraulique suivant la revendication 3, **caractérisé en ce que** l'élément élastomère (6) est disposé entre le trou de maintien (5) ménagé dans le couvercle (2) et l'élément cylindrique (4).

5. Ensemble hydraulique suivant la revendication 4, **caractérisé en ce qu'**un passage (8) est ménagé par endroits entre l'élément élastomère (6) et le trou de maintien (5).
